# EUROPÄISCHE PATENTSCHRIFT

(11) **EP 3 537 049 B1**
(45) Veröffentlichungstag und Bekanntmachung des Hinweises auf die Patenterteilung: **01.09.2021**
(21) Anmeldenummer: 19159283.1
(22) Anmeldetag: 26.02.2019
(51) Int. Cl.: F24C 7/08, H05B 6/12, H05B 6/06

(54) **KOCHFELD UND ERFAHREN EINER ANZEIGE AUF DIESEM KOCHFELD**
COOKING HOB AND METHOD FOR PROVIDING A DISPLAY ON THE COOKING HOB
CHAMP DE CUISSON ET PROCÉDÉ DE REPRÉSENTATION D'UN AFFICHAGE SUR CET CHAMP DE CUISSON

(30) Priorität: 09.03.2018 DE 102018203607
(43) Veröffentlichungstag der Anmeldung: 11.09.2019
(73) Patentinhaber: E.G.O. Elektro-Gerätebau GmbH, 75038 Oberderdingen (DE)
(72) Erfinder: Benz, Karl-Heinz, 75031 Eppingen (DE)
(74) Vertreter: Patentanwälte Ruff, Wilhelm, Beier, Dauster & Partner mbB

(56) Entgegenhaltungen:
- EP-A1- 1 505 854
- EP-A1- 2 876 973
- EP-A1- 2 911 473
- DE-A1- 10 033 361
- DE-A1-102014 110 026
- DE-A1-102014 207 261
- DE-T5-112013 003 978
- JP-A- 2014 044 809

## Beschreibung

### ANWENDUNGSGEBIET UND STAND DER TECHNIK

Die Erfindung betrifft ein Kochfeld sowie ein Verfahren zur Darstellung einer Anzeige an einem solchen Kochfeld.

Es ist aus der EP 2395813 B1 bekannt, an einem Kochfeld eine Anzeigeeinrichtung mit einer länglichen Anzeigefläche vorzusehen, wobei diese Anzeigefläche in eine Vielzahl von Feldern aufgeteilt ist, und jedes dieser Felder einzeln beleuchtbar ist. So können Symbole, Ziffern oder auch Kochstellen grafisch angezeigt werden.

Aus der EP 1505854 A1 ist es bekannt, bei einem Kochfeld eine Vielzahl von Heizeinrichtungen in einem Heizbereich vorzusehen, auf den ein Kochgefäß aufgestellt werden kann zum Beheizen. Eine zugehörige Anzeigeeinrichtung des Kochfelds weist eine Anzeigefläche auf mit neun Feldern, wobei jedes Feld durch vier Leuchtsegmente gebildet bzw. abgetrennt ist, die es umranden. Inmitten jedes Feldes ist zentral eine einzige Sieben-Segment-Anzeige angeordnet zur Darstellung einer Leistungsstufe. Dabei werden mit den Leuchtsegmenten diejenigen Felder leuchtend umrahmt und somit an der Anzeigefläche speziell angezeigt, die Teilbereichen auf der Kochfeldfläche entsprechen, auf denen zum Beheizen aufgestellte Kochgefäße erkannt worden sind.

Aus der EP 2 876 973 A1 ist eine weitere Möglichkeit bekannt, bei einem Kochfeld eine bestimmte Position, insbesondere eine sogenannte ideale Position, eines Kochgefäßes über einer Induktionsheizspule abzuprüfen. Gegebenenfalls soll eine Bedienperson dazu gebracht werden, nach entsprechender Signalisierung im Falle einer nicht-idealen Position diese zu verbessern und das Kochgefäß zu bewegen.

Aus der DE 10 2014 207 261 A1 ist es bekannt, eine Kochfeldfläche eines Kochfeldes mit einer Vielzahl von länglichen Markierungs-Leuchtmitteln zu versehen. Diese Markierungs-Leuchtmittel sind jeweils entlang des Außenrandes einer Heizeinrichtung vorgesehen. Sie sind bis in einen vorderen Bereich des Kochfeldes geführt und laufen damit optisch gut erkennbar auf eines von mehreren Dreh-Bedienelementen zu. So kann einer Bedienperson genau angezeigt werden, welches Dreh-Bedienelement welche von den Markierungs-Leuchtmitteln umrandeten Heizeinrichtungen als gemeinsame Kochstelle steuert.

Aus der DE 11 2013 003 978 T5 ist ein Induktionskochfeld bekannt mit einer Vielzahl von Induk-tionsheizspulen, wobei zwischen den benachbarten Induktionsspulen Leuchtsegmente verlaufen ähnlich wie bei der DE 10 2014 207 261 A1. Damit soll einer Bedienperson angezeigt werden, wo auf einer Kochfeldfläche Kochgefäße aufgesetzt werden können und sollen zum sinnvollen Beheizen.

Aus der JP 2014 044809 A ist ein nochmals weiteres Kochfeld bekannt mit einer Vielzahl von in regelmäßigem Muster angeordneten Induktionsspulen. Zwischen diesen sind Leuchtelemente in Plus-Symbolform angeordnet. Durch deren Beleuchtung kann einer Bedienperson Größe und Anordnung der Induktionsspulen dargestellt werden, auch um ein Kochgefäß optimal aufzusetzen.

Aus der DE 100 33 361 A1 ist ein Kochfeld bekannt, bei dem eine Vielzahl von Heizzonen, insbesondere gebildet durch Induktionsheizspulen, matrixartig ausgebildet ist und angeordnet ist. Durch spezielle Sensoren kann das Aufstellen eines Kochgefäßes erkannt werden.

Aus der EP 2 911 473 A1 ist ein nochmals weiteres Induktionskochfeld bekannt mit einer Vielzahl von in regelmäßigem Muster angeordneten Induktionsheizspulen. Es ist eine Vielzahl von IR-Sensoren vorgesehen, um das Aufstellen von Kochgefäßen erkennen zu können.

Aus der DE 10 2014 110 026 A1 ist ein nochmals weiteres Induktionskochfeld bekannt mit mehreren Induktionsheizspulen. In einem Heizbereich ist eine Vielzahl von Leuchtmitteln angeordnet, um einen optischen Positionierungshinweis an eine Bedienperson zu geben. Dabei können diese Leuchtmittel am Rande einer einzelnen Induktionsheizeinrichtung vorgesehen sein sowie in deren Mitte. Steht ein Kochgefäß nicht konzentrisch oder nicht gut über einer Induktionsheizspule, so ist ein solches Leuchtmittel frei und kann von oben erkannt werden.

### AUFGABE UND LÖSUNG

Der Erfindung liegt die Aufgabe zugrunde, ein eingangs genanntes Kochfeld sowie ein Verfahren zur Darstellung einer Anzeige an einem Kochfeld zu schaffen, mit denen Probleme des Standes der Technik gelöst werden können und es insbesondere möglich ist, vorteilhafte Anzeigemöglichkeiten für eine Bedienperson zu schaffen, durch die es auch möglich gemacht werden kann, nicht nur reine Informationen an eine Bedienperson zu geben, sondern auch Anweisungen oder Empfehlungen.

Gelöst wird diese Aufgabe durch ein Verfahren mit den Merkmalen des Anspruchs 5 sowie durch ein Kochfeld mit den Merkmalen des Anspruchs 1. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Kochfeld erläutert. Sie sollen jedoch unabhängig davon sowohl für ein Kochfeld als auch für ein Verfahren selbstständig und unabhängig voneinander gelten können, wobei der Schutzumfang durch die Ansprüche definiert wird. Der Wortlaut der Ansprüche wird durch ausdrückliche Bezugnahme zum Inhalt der Beschreibung gemacht.

Das Kochfeld weist eine Kochfeldfläche mit einem Heizbereich auf, um darauf Kochgefäße zum Beheizen aufzustellen. Es weist eine Vielzahl von Heizeinrichtungen im Heizbereich unter der Kochfeldfläche auf, wobei die Heizeinrichtungen eine regelmäßige Anordnung in Zeilen und Spalten aufweisen. Vorteilhaft sind die Heizeinrichtungen gleichartig, also sämtlich jeweils für die gleiche Beheizungsart ausgebildet, vorteilhaft Induktionsheizspulen oder Strahlungsheizkör-per. Besonders vorteilhaft sind sämtliche Heizeinrichtungen identisch und damit auch gleich groß.

Das Kochfeld weist Topferkennungsmittel im Heizbereich auf, um eine Position und eine Größe der Kochgefäße erkennen zu können. Dies kann über sogenannte Topferkennungssensoren erfolgen, beispielsweise optische, induktive und/oder kapazitive Sensoren, insbesondere über Induktionsspulen als zusätzliche Sensoren oder sogar über Induktionsheizspulen eines Induk-tionskochfelds. Schließlich weist das Kochfeld eine Anzeigeeinrichtung mit einer Anzeigefläche auf, wobei die Anzeigeeinrichtung an der Anzeigefläche längliche und einzeln beleuchtbare Leuchtsegmente aufweist. Vorteilhaft sind diese Leuchtsegmente strichförmig und beispielsweise 5 Mal bis 100 Mal so lang wie breit. Die Leuchtsegmente sind derart an der Anzeigefläche angeordnet, dass sie Felder in der Anzeigefläche bilden bzw. dass zwischen den Leucht-segmenten solche Felder gebildet werden. Diese Felder müssen dabei nicht zwingend, wenn sie viereckig oder rechteckig sind, an allen vier Seiten von Leuchtsegmenten umrahmt sein. Sie sind auch durch Leuchtsegmente entlang von drei Seiten ausreichend genau definiert, um eindeutig erkannt zu werden. Felder an einer Außenecke der Anzeigefläche können sogar durch nur zwei Leuchtsegmente ausreichend definiert sein.

Die Felder sind in Zeilen und Spalten angeordnet entsprechend der Anordnung der Heizeinrichtungen im Heizbereich, wobei die Anzahl von Zeilen der Heizeinrichtungen und Felder und die Anzahl von Spalten der Heizeinrichtungen und Felder jeweils übereinstimmen. Vorteilhaft sind auch die Proportionen der Felder bezüglich Länge und Breite gleich, so dass in einer vorteilhaften Ausgestaltung der Erfindung die Anzeigefläche mit den Leuchtsegmenten dasselbe Längen-Breiten-Verhältnis hat wie der Heizbereich. Die Anzahl der Felder entspricht der Anzahl der Heizeinrichtungen mit derselben Anordnung bzw. Unterteilung. Bei der Anzeigefläche verläuft zumindest in jedem Zwischenraum zwischen zwei Feldern ein Leuchtsegment. Die Ränder der Felder können in eine Richtung, in der sich kein weiteres Feld direkt daran anschließt, die also Außenränder der Anzeigefläche sind, ohne Leuchtsegment sein. In einer möglichen Ausgestaltung der Erfindung können aber auch hier an Außenrändern Leuchtsegmente vorgesehen sein, so dass auch tatsächlich jedes Feld von Leuchtsegmenten umrahmt ist entlang seiner Längsseiten. Des Weiteren ist in jedem Feld eine Anzeige angeordnet, um mindestens ein beliebiges Zeichen oder eine beliebige Ziffer darstellen zu können. Es können auch zwei Zeichen oder Ziffern dargestellt werden, alternativ ein oder mehrere Symbole wie auch Buchstaben oder nur einfache Punkte.

Bei dem Verfahren erkennen zuerst die Topferkennungsmittel ein auf den Heizbereich aufgesetztes Kochgefäß. Sie erkennen also sowohl das Aufsetzen an sich als auch Position und Größe des Kochgefäßes, zumindest mit einer Genauigkeit von 1% bis 20%, vorteilhaft von 2% bis 10%. Danach werden an der Anzeigeeinrichtung diejenigen Leuchtsegmente beleuchtet, die Felder bilden entsprechend denjenigen Heizeinrichtungen, die von dem Kochgefäß überdeckt sind. Diese Felder entsprechend diesen Heizeinrichtungen bilden dann eine Fläche an der Anzeigefläche, wobei innerhalb dieser Fläche keine Leuchtsegmente leuchten bzw. die beschriebenen Leuchtsegmente unbeleuchtet und deaktiviert bleiben. Somit wird die Fläche durch am Rand verlaufende Leuchtsegmente ausreichend gut erkennbar definiert, wobei, wie zuvor erläutert worden ist, an den Außenrändern oder Außenbereichen der Anzeigefläche nicht unbedingt Leuchtsegmente vorhanden sein müssen und auch keine Definition der Außengrenze durch Leuchtsegmente nötig ist. Mit den übrigen Leuchtsegmenten innerhalb der Anzeigefläche lässt sich aber auch die Fläche mit den Feldern entsprechend den überdeckten Heizeinrichtungen gut darstellen, so dass es eine Bedienperson genau erkennen kann.

Somit ermöglicht es die Erfindung einer Bedienperson, mit relativ wenig konstruktivem und entsprechend auch ansteuerungstechnischem Aufwand erkannte Zustände an der Kochfeldfläche an einer Anzeigeeinrichtung dargestellt zu bekommen. So kann insbesondere der Fall angezeigt bzw. dargestellt werden, in dem an der Kochfeldfläche keine einzeln abgetrennten Kochstellen, beispielsweise vier oder sechs Kochstellen pro Kochfeld, vorhanden sind, sondern eine Vielzahl von Heizeinrichtungen, die eine Kochstelle dort bilden, wo ein Kochgefäß aufgestellt ist. Diese Information kann mit der zum Beheizen des Kochgefäßes notwendigen Größe einer Bedienperson angezeigt werden. Hierfür wird dann kein Voll-Grafik-Display benötigt, welches teuer ist, eine sehr aufwendige Ansteuerung benötigt und teilweise auch Probleme mit einer Temperaturentwicklung hat, wenn es zu nahe an dem Heizbereich angeordnet ist.

In Ausgestaltung der Erfindung ist es möglich, dass eine Überdeckung von mindestens einer Heizeinrichtung durch das Kochgefäß erfasst wird, vorteilhaft mittels der vorgenannten Topferkennungsmittel. Für den Fall, dass in einer Kochfeldsteuerung für diese erfasste Überdeckung einprogrammiert ist, dass das Kochgefäß versetzt werden sollte für eine bessere Überdeckung der mindestens einen Heizeinrichtung des Kochfelds, können die Leuchtsegmente an der Anzeigeeinrichtung aktiviert werden. So kann einer Bedienperson angezeigt werden, welche Heizeinrichtungen entsprechend den Feldern, die von den aktivierten Leuchtsegmenten als Fläche umrandet sind oder gebildet bzw. dargestellt werden, von dem Kochgefäß überdeckt werden sollten. Somit kann in diesem Fall an der Anzeigeeinrichtung angezeigt werden, welche Heizeinrichtungen von einem Kochgefäß tatsächlich überdeckt werden. Wenn aber bei dieser Überdeckung von beispielsweise zwei Heizeinrichtungen erkannt worden ist, dass ein Kochgefäß dieser Größe auch von einer einzigen Heizeinrichtung beheizt werden könnte bei guter bzw. zentrischer Platzierung, so kann dies an der Anzeigeeinrichtung für eine Bedienperson dargestellt werden. So können beispielsweise beide Felder entsprechend den von dem Kochgefäß überdeckten Heizeinrichtungen mittels Leuchtsegmenten entsprechend umrandet, gebildet oder dargestellt werden. Mindestens ein Leuchtsegment, das eine geringer überdeckte Heizeinrichtung als Feld an der Anzeigefläche repräsentiert, kann dann schwächer leuchten als das andere Feld bzw. dessen Leuchtsegmente, alternativ kann es auch blinken, während Leuchtsegmente für das andere Feld kontinuierlich leuchten. Dies macht einer Bedienperson intuitiv klar, dass das Kochgefäß auf dem Heizbereich verschoben werden sollte in eine Richtung über eine Heizeinrichtung, selbst wenn diese nicht sichtbar ist, entsprechend dem empfohlenen Feld an der Anzeigefläche. Für diese Ausgestaltung der Erfindung ist es von Vorteil, wenn die Felder an der Anzeigefläche vollständig von Leuchtsegmenten umrahmt sind, um auf alle Fälle eine genaue Erkennbarkeit sowie genaue Unterscheidung der Felder zu ermöglichen. Eine Bedienperson kann eine solche Anweisung einfach verstehen und daraufhin das Kochgefäß so versetzen, wie es in der Kochfeldsteuerung einprogrammiert ist. Dabei kann vorgesehen sein, dass eine Heizeinrichtung zumindest 2%, vorteilhaft zumindest 5% bis maximal 20%, von einem Kochgefäß überdeckt sein muss, um für dessen Beheizung verwendet zu werden bzw. einer Bedienperson empfohlen werden kann. Bei geringerer Überdeckung ist ein Heizbetrieb zum einen offensichtlich ineffizient und zum anderen, beispielsweise bei Induktionsheizeinrichtungen, technisch kaum möglich und bei Strahlungsheizkörpern mit großem Risiko der freien heizenden und unbedeckten Fläche verbunden.

In weiterer Ausgestaltung der Erfindung kann für den Fall, dass das Kochgefäß zwei Heizeinrichtungen überdeckt, seine Größe aber derart ist, dass es nur maximal 20% oder sogar nur maximal 10% mehr Fläche aufweist als eine der Heizeinrichtungen, eine der vorgenannten Ziffern zur Anzeige einer Leistungsstufe nur in einem der beiden von Leuchtsegmenten gebildeten Feldern dargestellt wird. Eine vorgenannte Ziffer zur Anzeige einer Leistungsstufe kann auch dann nur in einem von mehreren von Leuchtsegmenten gebildeten Feldern dargestellt werden, wenn das Kochgefäß durch seine Position über eine einem anderen Feld entsprechende Heizeinrichtung nur um 10% bis 20% übersteht bzw. diese entsprechend überdeckt. Es wird also dasjenige Feld durch die Ziffer gekennzeichnet, dessen zugehörige Heizeinrichtung hauptsächlich oder am stärksten von dem Kochgefäß überdeckt wird. Das der nur geringfügig überdeckten Heizeinrichtung entsprechende Feld ist ohne Ziffer.

Auch dies kann eine Anweisung für eine Bedienperson sein, das Kochgerät im Heizbereich entsprechend an die Stelle desjenigen Feldes an der Anzeigefläche zu versetzen, innerhalb dessen die Ziffer dargestellt ist. In der Regel wird die Ziffer dann an der Stelle desjenigen Feldes bzw. innerhalb desjenigen Feldes dargestellt, das der mehr überdeckten Heizeinrichtung im Heizbereich entspricht, so dass eine Bedienperson erkennen kann, dass sie das Kochgefäß möglichst zentrisch über diese Heizeinrichtung stellen soll. In diesem Fall wird das Kochgefäß nämlich besser nur durch eine einzige Heizeinrichtung beheizt.

Wenn die einzelnen Heizeinrichtungen nicht an der Kochfeldfläche bzw. im Heizbereich markiert sind, kann eine Bedienperson hier zumindest erkennen, ob sie den Topf in Richtung linksrechts oder in Richtung vorne-hinten verschieben soll. Wenn das Erreichen einer guten oder optimalen Position mit einer Überdeckung bzw. Zentrizität mit maximal 10% oder maximal 5% Abweichung auf den Durchmesser des Kochgefäßes bezogen erreicht worden ist, kann dies durch ein akustisches Signal angezeigt werden oder optisch signalisiert werden, beispielsweise durch Blinken und/oder helleres Leuchten der Leuchtsegmente für dasjenige Feld an der Anzeigefläche, über dessen entsprechende Heizeinrichtung das Kochgefäß nun platziert worden ist.

In dem Fall, dass das Kochgefäß mehr als zwei Heizeinrichtungen überdeckt, seine Größe jedoch nur maximal 20% oder 10% über der gemeinsamen Fläche von zwei Heizeinrichtungen liegt, kann entsprechend verfahren werden. Das gilt auch für den vorgenannten Fall, dass das Kochgefäß nur um 10% bis 20% eine Heizeinrichtung überdeckt bzw. über diese übersteht. Üblicherweise kann jedoch davon ausgegangen werden, dass runde Kochgefäße bzw. kreisrunde Kochgefäße nur von einer Heizeinrichtung, von zwei Heizeinrichtungen, vier Heizeinrichtungen oder sechs Heizeinrichtungen usw. gut beheizt werden sollen. Die Anzahl der Heizeinrichtungen sollte dabei entweder gerade sein oder eine Quadratzahl sein. Nur seltene Kochgefäße wie ovale Bräter odgl. können auf zwei, drei, sechs oder acht Heizeinrichtungen optimal platziert sein.

In einer Ausbildung der Erfindung kann für den Fall, dass mehr als ein Feld eine zusammenhängende Fläche an der Anzeigefläche bildet, eine Ziffer immer möglichst weit rechts und/oder immer möglichst weit hinten in einem Feld in dieser zusammenhängenden Fläche dargestellt werden. Durch eine generelle Regel ist es möglich, dass für eine vorbeschriebene Empfehlung zum Umsetzen des Kochgefäßes die Ziffer innerhalb der Fläche auch in einem linken Feld dargestellt werden kann, was dann eben die Anweisung zum Versetzen nach links beinhaltet.

In einer alternativen Ausbildung der Erfindung kann eine Ziffer in dem Feld der zusammenhängenden Fläche dargestellt werden, über dessen entsprechender Heizeinrichtung das Kochgefäß hauptsächlich oder mit der größten einzelnen Fläche steht. Es ist also die am stärksten überdeckte Heizeinrichtung.

In vorteilhafter Weiterbildung der Erfindung können an der Anzeigefläche Berührsensoren angeordnet sein, und zwar derart, dass sie den Ort eines Aufsetzens einer Fingers auf die Anzeigefläche erkennen. Dies ist an sich bekannt und ähnelt der Funktion eines sogenannten Touch-Screens, wenngleich hier mit erheblich verringerten optischen Darstellungsmöglichkeiten aber eben auch deutlich verringertem Aufwand. Eine Auflösung des Erkennens eines Aufsetzens eines Fingers auf die Anzeigefläche kann einem einzelnen durch Leuchtsegmente begrenzten oder gekennzeichneten Feld entsprechen. Innerhalb dieses Feldes müssen dann keine unterschiedlichen Aufsetzorte erkannt werden können. In einem Auswählmodus des Bedienverfahrens kann erkannt werden, über welchen Feldern ein Finger einer Bedienperson aufgesetzt worden ist und gegebenenfalls durch aufgesetzte ziehende Bewegung über weitere Felder bewegt wird. Entweder kann durch das Ziehen mit dem Finger eine Art Linie auf der Anzeigefläche gezogen werden, die einen bestimmten Bereich, der durch die Linie begrenzt wird, markiert. Alternativ und vorteilhaft können die Felder, über denen der Finger einer Bedienperson aufgesetzt worden ist, beispielsweise innerhalb einer gewissen kurzen Zeit von 2 sec bis 5 sec, oder die durch eine aufgesetzte ziehende Bewegung über sich hinweg zu einer zusammenhängenden Auswählfläche zusammengefasst worden sind, an der Anzeigefläche dargestellt werden. Dies wird vorteilhaft durch Aktivieren von zumindest teilweise umrandenden Leuchtsegmenten an der Anzeigefläche gemacht, wobei eben wiederum gilt, dass innerhalb dieser Auswählfläche ähnlich wie zuvor bei der Überdeckung durch ein Kochgefäß keine Leuchtsegmente aktiviert sind. Ob an einem Außenrand Leuchtsegmente aktiviert werden, hängt davon ab, ob diese überhaupt vorhanden sind.

Diese Auswahlfläche kann dann in einem weiteren Schritt die ihr entsprechenden Heizeinrichtungen im Heizbereich mit jeweils derselben Leistungshöhe oder Leistungsstufe arbeiten lassen als Auswählbereich am Heizbereich. Hierfür kann bevorzugt ein einziger Einstellvorgang ausreichen, beispielsweise durch das Betätigen eines einzigen weiteren Bedienelements. Dann muss noch eine Leistungshöhe oder Leistungsstufe für diese Auswahlfläche eingestellt werden, wofür bekannte Verfahren verwendet werden können. Dann wird eine Heizeinrichtung innerhalb dieses Auswählbereichs, wenn sie von einem Kochgefäß mit mindestens dem vorgenannten Mindestbedeckungsgrad überdeckt worden ist, mit dieser Leistungsstufe oder Leistungshöhe betrieben. Sämtliche Heizeinrichtungen innerhalb dieses Auswählbereichs entsprechend der Auswählfläche arbeiten dann, falls sie überhaupt arbeiten, mit derselben Leistungshöhe bzw. Leistungsstufe. Somit kann für eine Bedienperson sehr leicht erreicht werden, dass in diesem Teil des Heizbereichs entsprechend der Auswählfläche an der Anzeigefläche ein Kochgefäß nur aufgesetzt werden muss und dann eben automatisch und selbsttätig mit der Leistungshöhe oder Leistungsstufe dieser Auswahlfläche betrieben wird. Möglicherweise erfolgt an der Anzeigeeinrichtung eine Hilfe zur Korrektur eines Aufsetzortes des Kochgefäßes auf vorbeschriebene Art und Weise. Dies ändert aber nichts an der grundsätzlichen Kennzeichnung der Fläche.

Bevorzugt kann bei diesem Verfahren eine Leistungsstufe oder Leistungshöhe für die Heizeinrichtungen entsprechend dieser Auswählfläche als Ziffer dargestellt werden, besonders vorteilhaft innerhalb dieser Auswählfläche. Eine Möglichkeit hier ist abweichend von der vorbeschriebenen Möglichkeit eine Darstellung in einem vorderen Bereich bzw. Feld, vorzugsweise möglichst weit vorne bzw. in einem vordersten Feld. So kann erreicht werden, dass dies für eine Bedienperson erkennbar die Leistungsstufe oder Leistungshöhe für die gesamte Auswählfläche bzw. die dieser entsprechenden Heizeinrichtung im Heizbereich ist.

Benachbarte oder entlang von einem Leuchtsegment aneinander angrenzende Felder können vorteilhaft durch Aufsetzen des Fingers und durch aufgesetzte ziehende Bewegung über weitere Felder zu einer beliebigen zusammenhängenden Flächengeometrie als Auswählfläche zusammengefasst werden. Es muss also kein Rechteck oder eine ähnliche geometrische Grundform sein, aufgrund der ziehenden Bewegung muss die Auswählfläche aber zusammenhängen. Auf dem Kochfeld wird dann ein entsprechender zusammenhängender Auswählbe-reich gebildet.

Für die Heizeinrichtungen im Auswählbereich entsprechend der Auswählfläche gilt vorteilhaft, dass sie mit derselben Leistungsstufe bzw. Leistungsdichte betrieben werden auf die Fläche einer Heizeinrichtung bezogen. Dies bedeutet, dass die Heizeinrichtung, die nur zu 20% von einem Kochgefäß bedeckt wird, im Vergleich zu einer Heizeinrichtung mit 100% Überdeckung mit derselben Leistungsdichte betrieben wird, aufgrund der geringeren Überdeckung aber dann wesentlich weniger Leistung als Absolutwert entwickelt.

Dies ist aber entsprechend von allgemeinen Betriebsverfahren für Induktionsheizeinrichtungen bekannt, weil die hier beschriebene Betriebsweise nur für Induktionsheizeinrichtungen gilt. Strahlungsheizkörper können in aller Regel nur mit einer vorgegebenen Leistungsdichte betrieben werden, wobei eine Leistungseinstellung bekanntermaßen über Takten erfolgt.

In weiterer Ausgestaltung der Erfindung können an der Kochfeldfläche, insbesondere zumindest im Heizbereich, aktivierbare Heiz-Leuchtsegmente vorgesehen sein entlang der Zeilen und Spalten entsprechend den Leuchtsegmenten an der Anzeigefläche, also die Heizeinrichtung sozusagen begrenzend oder neben den Heizeinrichtungen verlaufend. So können die Heiz-Leuchtsegmente an der Kochfeldfläche entlang von Außenseiten der Heizeinrichtungen verlaufen, wobei zwischen zwei benachbarten Heizeinrichtungen nur ein einziges Heiz-Leuchtsegment verläuft. Die Heiz-Leuchtsegmente der Kochfeldfläche können entsprechend den Leuchtsegmenten an der Anzeigefläche aktiviert werden. So kann einer Bedienperson auch eine der Kochfeldflächen selbst angezeigt werden, zumindest temporär, wo die Heizeinrichtungen verlaufen und wo ein Kochgefäß aufgesetzt werden sollte für eine möglichst gute Beheizung und eine möglichst gute Bedeckung der Heizeinrichtungen. An den Außenseiten der Kochfeldfläche bzw. entlang von nach außen weisenden Heizeinrichtungen, an die keine weitere Heizeinrichtung anschließt, müssen dann nicht unbedingt Heiz-Leuchtsegmente vorgesehen sein aus den eingangs zur Anzeigeeinrichtung genannten Gründen.

Allgemein kann für die Leuchtsegmente an der Anzeigefläche wie auch für die möglicherweise vorgesehenen Heiz-Leuchtsegmente an der Kochfeldfläche vorgesehen sein, dass sie nicht zwingend durchgängige Leuchtstreifen sein müssen. Sie können auch durch mehrere einzelne Leuchtpunkte oder kurze Leuchtstreifen gebildet werden, beispielsweise mindestens zwei Leuchtpunkte oder kurze Leuchtstreifen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Draufsicht auf eine Anzeigeeinrichtung mit einer Vielzahl von horizontalen und vertikalen Leuchtsegmenten, die Felder bilden, in denen Ziffernanzeigen vorgesehen sind,
- Fig. 2: eine Draufsicht auf ein erfindungsgemäßes Kochfeld mit vergrößert herausgezogener Anzeigeeinrichtung, wobei das Kochfeld Heizeinrichtungen aufweist in einer Anordnung entsprechend den Feldern der Anzeigeeinrichtung, mit zwei aufgesetzten Kochgefäßen und einer entsprechenden Anzeige,
- Fig. 3: eine Variation des Kochfelds aus Fig. 2 mit horizontalen und vertikalen Leuchtsegmenten auch an einer Kochfeldfläche,
- Fig. 4: das Kochfeld aus Fig. 2 mit verschobenen Kochgefäßen aufgrund der Informationen durch die Anzeige an der Anzeigeeinrichtung,
- Fig. 5: ein weiterer Aspekt der Erfindung mit einem erfindungsgemäßen Verfahren zur Bestimmung einer Auswählfläche an der Anzeigeeinrichtung, um einige Heizeinrichtungen zusammengefasst und gleichartig zu betreiben und
- Fig. 6: in einem Schritt nach der Fig. 5 einen Betrieb am Kochfeld mit mehreren Kochgefäßen über den zusammengefassten Heizeinrichtungen entsprechend der Auswählfläche.

### DETAILLIERTE BESCHREIBUNG DER AUSFÜHRUNGSBEISPIELE

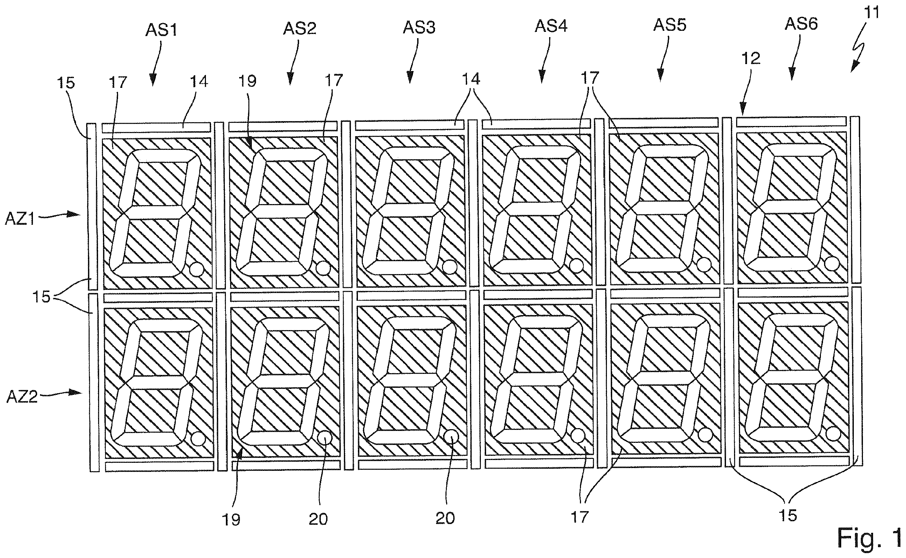

In der Fig. 1 ist eine Anzeigeeinrichtung 11 für ein erfindungsgemäßes Kochfeld dargestellt, die länglich rechteckig ist und eine entsprechende Anzeigefläche 12 aufweist. Die Anzeigefläche 12 ist durch horizontale Leuchtsegmente 14 und durch vertikale Leuchtsegmente 15 in eine Vielzahl von rechteckigen Feldern 17 unterteilt. Diese Felder 17 sind entlang von Anzeigespalten AS1 bis AS6 und zwei Anzeigezeilen AZ1 und AZ2 unterteilt. Es sind also zwölf Felder 17 vorgesehen. In jedem Feld 17 befindet sich eine Ziffernanzeige 19 und eine Punktanzeige 20. Diese Ziffernanzeigen 19 sind als bekannte Sieben-Segment-Anzeigen ausgebildet, wobei jedes Segment durch eine einzelne LED einzeln beleuchtbar ist. Auch für die Punktanzeige 20 ist eine einzelne LED vorgesehen. Derartige Sieben-Segment-Anzeigen sind beispielsweise aus der EP 1030536 A2 bekannt, auf welche hiermit verwiesen wird. Die horizontalen Leuchtsegmente 14 und die vertikalen Leuchtsegmente 15 sind auch auf im Prinzip ähnliche Art und Weise durch Lichtleitkörper gebildet und können durch eine oder mehrere einzelne LEDs beleuchtet werden. Anstelle von jeweils durchgängigen Leuchtsegmenten könnten auch zwei oder drei in einer entsprechenden Linie angeordnete kurze Leuchtsegmente oder Leuchtpunkte vorgesehen sein. Wichtig ist hier eben, dass, wie aus der Fig. 1 schon zu ersehen ist und nachher noch im Detail dargestellt wird, die Leuchtsegmente eine Unterteilung der Anzeigefläche 12 in Felder 17 ermöglicht bzw. bewirkt, dass eine Bedienperson dies erkennen kann. Auch an den Außenrändern der Anzeigefläche 12 sind hier horizontale vertikale Leuchtsegmente vorgesehen, dies müsste aber nicht zwingend sein. Dies zeigen die nachfolgenden Ausführungsbeispiele.

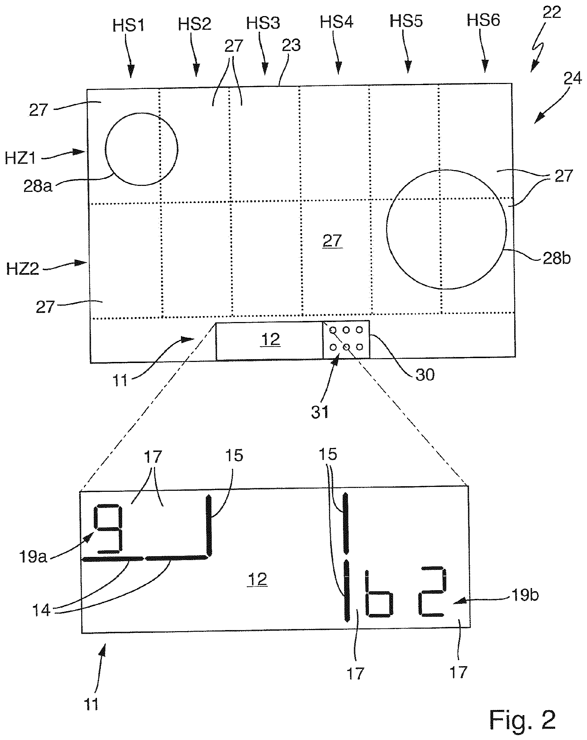

In der Fig. 2 ist in Draufsicht ein erfindungsgemäßes Kochfeld 22 dargestellt mit einer rechteckigen Kochfeldfläche 23, vorteilhaft gebildet durch eine Glaskeramikplatte. Die Kochfeldfläche 23 weist einen großen Heizbereich 24 auf, nur in einem vorderen schmalen Bereich ist die Anzeigeeinrichtung 11 mit einer rechts daneben angeordneten Bedieneinrichtung 30 vorgesehen, die Bedienelemente 31 aufweist. Die Bedienelemente 31 der Bedieneinrichtung 30 sind ebenfalls unterhalb der Kochfeldfläche angeordnet. Die Anzeigeeinrichtung 11 selbst ist auf an sich bekannte Art und Weise und durch diese Kochfeldfläche 23 hindurch erkennbar bzw. sichtbar. Die Bedienelemente 31 können die verschiedenen Funktionen bewirken und sind vorteilhaft als optische, induktive oder kapazitive Bedienelemente ausgebildet.

Die Kochfeldfläche 23 des Kochfelds 22 weist mehrere gepunktet dargestellte Heizeinrichtungen 27 auf in einer Anordnung von Heizspalten HS1 bis HS6 und Heizzeilen HZ1 und HZ2. Die Anzahl entspricht jeweils derjenigen der Anzeigespalten AS1 bis AS6 und Anzeigezeilen AZ1 und AZ2 der Anzeigeeinrichtung 11 gemäß Fig. 1. Die Proportionen der Felder 17 und der Heizeinrichtungen 27 hinsichtlich Länge und Breite können jeweils gleich sein oder aber auch unterschiedlich sein. Vorteilhaft sind sie gleichartig und wie hier dargestellt länger als breit.

Auf der Oberfläche der Kochfeldfläche 23 können Markierungen vorgesehen sein ähnlich der hier dargestellten punktierten Linien zur Verdeutlichung der Heizeinrichtungen 27, so dass eine Bedienperson erkennen kann, wie die Heizeinrichtungen 27 verteilt sind. Dies muss aber nicht so sein, insbesondere kann eine Kochfeldfläche 23 ohne Dekor auch optisch ansprechender sein.

In der Fig. 2 sind auf die Kochfeldfläche 23 im Heizbereich 24 links oben ein kleines Kochgefäß 28a und rechts unten ein größeres Kochgefäß 28b aufgesetzt. Das Kochgefäß 28a überdeckt mit einem Großteil seiner Fläche die Heizeinrichtung 27 in HS1/HZ1, und mit einem kleineren Teil die rechts daneben angeordnete Heizeinrichtung 27 in HS2/HZ1. Das größere Kochgefäß 28b rechts unten überdeckt jeweils mit einem Großteil die Heizeinrichtungen 27 in HS5/HZ2 und in HS6/HZ2. Mit einem kleineren Teil überdeckt es auch die beiden Heizeinrichtungen 27 darüber, nämlich in HS5/HZ1 und in HS6/HZ1.

An der Anzeigeeinrichtung 11, die vergrößert nach unten herausgezogen ist zur besseren Darstellung, wird einer Bedienperson angezeigt, wie die Kochgefäße 28a und 28b im Heizbereich 24 platziert sind und wie sie platziert werden sollten. Des Weiteren ist mittels der linken Anzeige 19a dargestellt, dass für das Kochgefäß 28a eine Leistungsstufe "9" eingestellt worden ist, Diese Leistungsstufe kann eingestellt worden sein mittels der Bedienelemente 31. Für das rech-te große Kochgefäß 28b ist als Leistungsstufe eine Booststufe 2 eingestellt, die Anzeige 19b zeigt "b2" an, also eine Beheizung mit maximaler Leistung. Dies ist vor allem dadurch möglich, dass die Heizeinrichtungen 27 Induktionsheizspulen sind, für diese ist ein derartiger kurzzeitiger Boost-Betrieb bekannt und möglich.

An der Anzeigefläche 12 sind links zwei horizontale Leuchtsegmente 14 und ein vertikales Leuchtsegment 15 beleuchtet, die veranschaulichen, dass die beiden von ihnen abgetrennten und erkennbaren Felder 17 entsprechend Fig. 1 entsprechend den vom Kochgefäß 28a überdeckten Heizeinrichtungen 27 quasi diese Überdeckung anzeigen. Zur noch deutlicheren Darstellung, dass hier zwei Felder 17 gebildet sind entsprechend der Fläche der beiden Heizeinrichtungen 27, könnte ein vertikales Leuchtsegment beginnend zwischen den beiden horizontalen Leuchtsegmenten 14 schwach leuchten oder blinkend leuchten. Die Ziffernanzeige 19a mit der Leistungsstufe "9" zeigt somit, dass in diesem Bereich an dem Heizbereich 24 entsprechend den beiden Heizeinrichtungen 27 die Leistungsstufe "9" eingestellt ist zum entsprechenden Beheizen des Kochgefäßes 28a.

Dadurch, dass an der Anzeigefläche 12 die Ziffernanzeige 19a mit der Leistungsstufe "9" links dargestellt ist in den beiden Feldern, die durch die Leuchtsegmente 14 und 15 gekennzeichnet sind, kann einer Bedienperson die Information gegeben werden, dass das Kochgefäß 28a im Heizbereich 24 nach links verschoben werden sollte. Eine nicht dargestellte Kochfeldsteuerung des Kochfelds 22, die beispielsweise in einer Baueinheit mit der Bedieneinrichtung 30 auf übliche Art und Weise vorgesehen sein kann, kann über die Topferkennungsmittel, welche im vorliegenden Fall die Heizeinrichtungen 27 selbst sind, erkennen, dass das Kochgefäß 28a eine derartige Größe hat, dass es auch nur von einer einzigen Heizeinrichtung 27 beheizt werden kann. Die Überdeckung von zwei Heizeinrichtungen 27 ist somit ungünstig bzw. nicht notwendig, da die rechte Heizeinrichtung 27 aufgrund der geringen Überdeckung nicht betrieben werden sollte oder, falls sie doch betrieben wird, sehr ineffizient ist.

Des Weiteren können auch zusätzliche Topferkennungsmittel nach Art von zusätzlichen Sensorspulen im Heizbereich 24 vorgesehen sein, wie sie beispielsweise aus der EP 3026981 A1 bekannt sind, auf welche diesbezüglich explizit verwiesen wird. Derartige Sensorspulen sind vorteilhaft im Bereich zwischen zwei benachbarten Heizeinrichtungen vorgesehen, beispielsweise eine oder zwei. Des Weiteren könnte auch über einer Heizeinrichtung eine weitere Sensorspule vorgesehen sein.

Ähnlich ist für das rechte Kochgefäß 28b erkannt worden, dass es zwar die vier rechten Heizeinrichtungen 27 überdeckt, und dabei die zwei hinteren geringfügig und die zwei vorderen großteils. Die erkannte Größe des Kochgefäßes 28b ist jedoch so, dass die Kochfeldsteuerung erkennen kann, dass es auch von zwei Heizeinrichtungen 27 alleine beheizt werden könnte, dafür aber falsch positioniert ist. Deswegen ist dort als Anweisung an eine Bedienperson die Ziffernanzeige 19b mit der Leistungsstufe "b2" vorne dargestellt in dem Bereich der durch die vertikalen Leuchtsegmente 15 gebildeten vier Felder entsprechend den vier Heizeinrichtungen 27, die vom Kochgefäß 28b überdeckt sind. Auch hier kann eine Bedienperson erkennen, dass das Kochgefäß 28b nach vorne verschoben werden sollte.

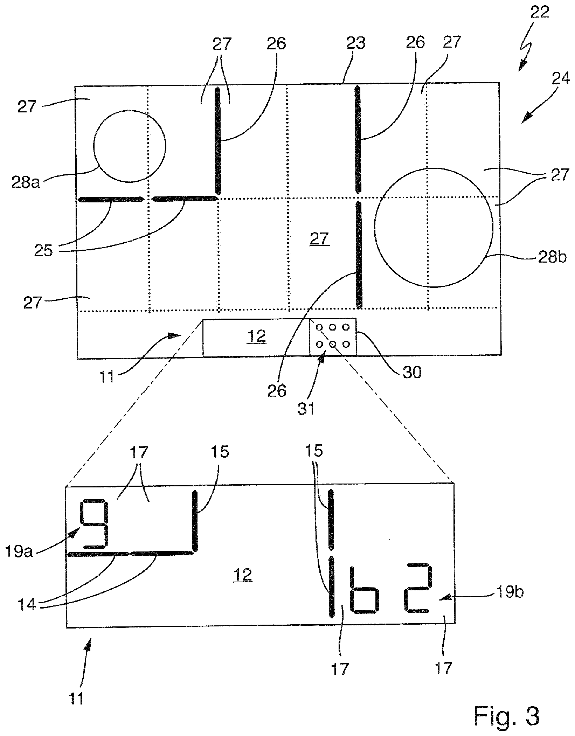

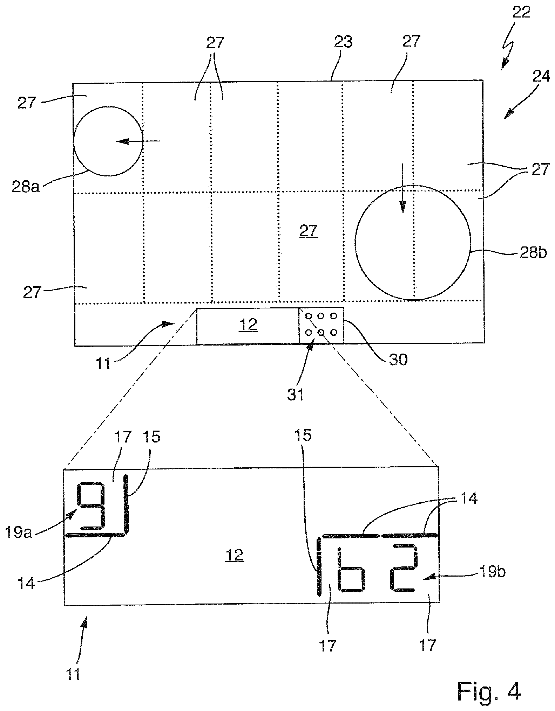

In der Fig. 3 ist eine Darstellung entsprechend Fig. 2 zu sehen, wobei hier zusätzlich im Heizbereich 24 ebenfalls horizontale Heiz-Leuchtsegmente 25 und vertikale Heiz-Leuchtsegmente 26 vorgesehen sind. Diese entsprechen von der Anordnung denjenigen an der Anzeigeeinrichtung 11 bzw. an der Anzeigefläche 12. Sie können durch entsprechende Beleuchtungseinrichtungen unterhalb der Kochfeldfläche 23 als Kochfeldplatte gebildet sein, die dem Fachmann aus dem Stand der Technik bekannt sind. Die Heiz-Leuchtsegmente 25 und 26 umrahmen die Heizeinrichtungen 27, die von den Kochgefäßen 28a und 28b überdeckt sind. Sie sind zumindest mit einer Art Mindestbedeckung überdeckt, welche mehr als 2% beträgt, vorzugsweise mehr als 10%. Hier kann eine Bedienperson sofort und problemlos erkennen, dass das Kochgefäß 28a in dem durch die Heiz-Leuchtsegmente 25 und 26 markierten Bereich ungünstig sitzt und verschoben werden sollte zusätzlich zu der Information über die Ziffernanzeige 19b wie zuvor erläutert. Hier könnte auch vorgesehen sein, dass das vertikale Heiz-Leuchtsegment 26 unterhalb des Kochgefäßes 28a, das zwischen den beiden überdeckten Heizeinrichtungen 27 verläuft, schwach beleuchtet wird oder blinkend beleuchtet wird. Dann kann eine Bedienperson selbst einschätzen, ob und wie das Kochgefäß 28a versetzt werden sollte. Aus dem Vergleich mit der Fig. 4, die die versetzten Kochgefäße 28a und 28b zeigt, ist zu sehen, dass das Kochgefäß 28a einen Durchmesser genau entsprechend der Breite einer Heizeinrichtung 27 aufweist. Wäre das Kochgefäß 28a etwa 20% größer, so wäre es für eine Beheizung durch eine Heizeinrichtung 27 alleine wohl zu groß bzw. eine Bedienperson könnte insbesondere durch Darstellung der Heiz-Leuchtsegmente 25 und 26 erkennen, dass das Kochgefäß 28a dann mittig über den beiden Heizeinrichtungen 27 platziert werden sollte und von beiden beheizt wird.

In Fig. 3 ist für das rechte Kochgefäß 28b dargestellt, dass hier zwei vertikale Heiz-Leuchtsegmente 26 die vier Heizeinrichtungen 27 markieren, die von dem Kochgefäß 28b überdeckt sind. Somit entsprechen hier die beiden vertikalen Heiz-Leuchtsegmente 26 den vertikalen Leuchtsegmenten 15 rechts an der Anzeigeeinrichtung 11. Auch hier kann eine Bedienperson relativ leicht ersehen, dass es ausreicht, das Kochgefäß 28b nach vorne zu ziehen. Alternativ könnte es mit seiner Größe auch über dem Punkt platziert werden, an dem sich die vier benachbarten Heizeinrichtungen 27 treffen.

Aus Fig. 4 ist zu sehen, dass das linke Kochgefäß 28a nach links verschoben worden ist und das rechte Kochgefäß 28b nach vorne. Dies konnte die Bedienperson ja an der Anordnung der Ziffernanzeigen 19a und 19b innerhalb der durch die Leuchtsegmente 14 und 15 markierten Flächen ersehen. Die Position der Kochgefäße 28a und 28b ist nun für eine Beheizung erheblich besser. An der Anzeigeeinrichtung 11 ist dies entsprechend dargestellt dadurch, dass nun die horizontalen Leuchtsegmente 14 und vertikalen Leuchtsegmente 15 Felder 17 kennzeichnen oder abtrennen, die von den Kochgefäßen 28a und 28b überdeckten Heizeinrichtungen 27 entsprechen. Eine vorherige zusätzliche Anzeige an eine Bedienperson, dass mindestens ein Kochgefäß 28 verschoben werden sollte, kann nun stoppen bzw. deaktiviert werden. Dies könnte ein Blinken einer optischen Anzeige sein oder auch eine entsprechende akustische Anzeige.

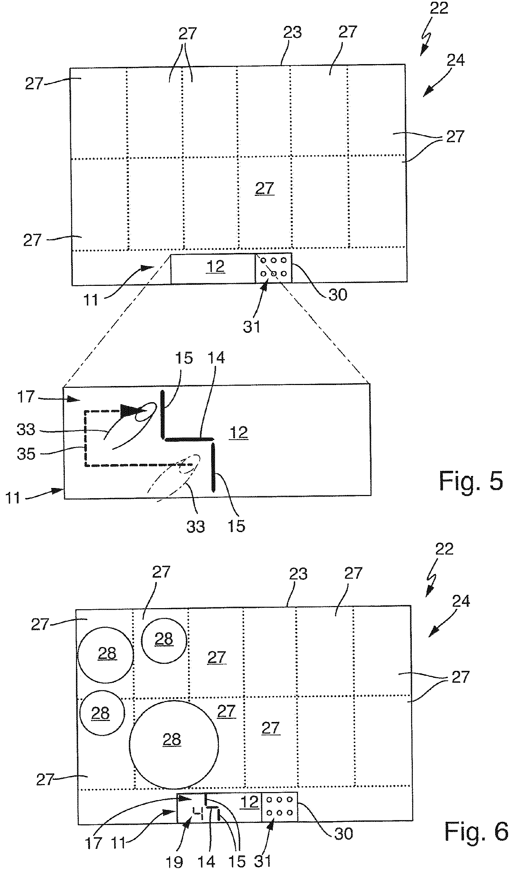

Eine weitere Möglichkeit für ein erfindungsgemäßes Verfahren, wie es eingangs beschrieben worden ist, ist in den Fig. 5 und 6 beschrieben. An dem Kochfeld 22 mit der Anzeigeeinrichtung 11, die wieder vergrößert nach vorne gezogen ist, kann in einem Auswählmodus ein Bereich entsprechend einer Auswählfläche für einen Betrieb der darin enthaltenen Heizeinrichtungen mit einer einzigen gemeinsamen Leistungsstufe markiert werden. Dazu kann über die Bedieneinrichtung 30 dieser Auswählmodus bestimmt oder aktiviert werden, was durch ein optisches und/oder akustisches Signal quittiert werden kann, so dass es eine Bedienperson erkennen kann. Dann wird, wie an der Anzeigefläche 12 dargestellt ist, ein Finger 33 auf die Anzeigefläche 12 aufgesetzt und in einer strichliert dargestellten durchgehenden Bewegung mit einem Bewegungszug 35 so geführt, dass er mehrere Felder 17 überstreicht. Hier sind es fünf Felder 17, und zwar links oben zwei Felder und links unten drei Felder. Dies erkennt eine Kochfeldsteuerung mittels Berührsensoren an der Anzeigefläche 12, beispielsweise an den Sieben-Segment-Anzeigen der Ziffernanzeigen 19 angeordnet. Durch ein horizontales Leuchtsegment 14 und zwei vertikale Leuchtsegmente 15 werden die Felder 17 an der Anzeigefläche 12 als Auswählfläche markiert bzw. abgetrennt. Sind an dem Heizbereich 24 auch Heiz-Leuchtsegmente vorgesehen entsprechend der Fig. 3, so könnte auch hier wieder eine entsprechende Beleuchtung dieser Heiz-Leuchtsegmente am Heizbereich 24 die Fläche entsprechend der Auswählfläche als Auswählbereich anzeigen. Dann kann in einem nächsten Schritt, möglicherweise auch in einem vorhergehenden Schritt, eine Leistungsstufe an der Bedieneinrichtung 30 für diesen Auswählbereich festgelegt werden. Dies zeigt die Fig. 6 ohne vergrößert herausgezogene Anzeigefläche 12, wo eine Ziffernanzeige 19 die Leistungsstufe "4" darstellt. Dies erfolgt in einem vorderen Bereich an der Anzeigefläche 12, so dass dies für eine Bedienperson besonders gut veranschaulicht ist. Somit können nun mehrere Kochgefäße 28 mit verschiedenen Größen innerhalb des Auswählbereichs im Heizbereich 24 aufgesetzt werden. Sie werden alle mit der Leistungsstufe "4" beheizt, zumindest dann, wenn eine Heizeinrichtung 27 zu mehr als die vorgenannten 2% oder 10% von einem Kochgefäß 28 überdeckt ist. Sollte innerhalb dieses Auswählbereichs eine Heizeinrichtung unterhalb dieses Grenzwerts oder gar nicht bedeckt sein, so wird sie natürlich auch nicht betrieben. Gerade für Heizeinrichtungen als Induktionsheizeinrichtungen ist dies ja quasi selbstverständlich.

Aus Fig. 6 ist auch zu erkennen, dass noch ein weiterer solcher Auswählbereich vorgesehen sein könnte, da sowohl im Heizbereich 24 als auch an der Anzeigefläche 12 genügend Platz vorhanden ist.

## Patentansprüche

1. Kochfeld (22) aufweisend:
- eine Kochfeldfläche (23) mit einem Heizbereich (24) zum Aufstellen von Kochgefäßen (28) zum Beheizen,
- eine Vielzahl von Heizeinrichtungen (27) im Heizbereich (24) unter der Kochfeldfläche 23), wobei die Heizeinrichtungen (27) eine regelmäßige Anordnung in Zeilen (HZ) und Spalten (HS) aufweisen,
- Topferkennungsmittel (27) im Heizbereich (24) zur Erkennung einer Position und einer Größe der Kochgefäße (28),
- eine Anzeigeeinrichtung (11) mit einer Anzeigefläche (12), wobei
- die Anzeigeeinrichtung (11) längliche und einzeln beleuchtbare Leuchtsegmente (14, 15) an der Anzeigefläche (12) aufweist,
- die Leuchtsegmente (14, 15) derart angeordnet sind, dass sie Felder (17) in der Anzeigefläche (12) bilden,
- die Felder (17) in Zeilen (AZ) und Spalten (AS) angeordnet sind entsprechend der Anordnung der Heizeinrichtungen (27) im Heizbereich (24) mit der gleichen Anzahl von Zeilen (HZ) und Spalten (HS),
- im Zwischenraum zwischen zwei Feldern (17) ein Leuchtsegment (14, 15) verläuft,
- in jedem Feld (17) eine Anzeige (19, 20) zur Darstellung mindestens eines beliebigen Zeichens oder einer beliebigen Ziffer angeordnet ist,
- eine Kochfeldsteuerung,
**dadurch gekennzeichnet, dass** in der Kochfeldsteuerung abgespeichert ist und die Kochfeldsteuerung dazu ausgebildet ist, dass:
- die Topferkennungsmittel (27) ein auf den Heizbereich (24) aufgesetztes Kochgefäß (28), dessen Position und dessen Größe erkennen,
- an der Anzeigeeinrichtung (11) diejenigen Leuchtsegmente (14, 15) beleuchtet werden, die Felder (17) bilden entsprechend denjenigen Heizeinrichtungen (27), die von dem erkannten Kochgefäß (28) überdeckt sind, wobei diese Felder (17) entsprechend diesen Heizeinrichtungen (27) eine Fläche bilden und innerhalb dieser Fläche die Leuchtsegmente (14, 15) unbeleuchtet bzw. deaktiviert bleiben.

2. Kochfeld nach Anspruch 1, **dadurch gekennzeichnet, dass** an der Anzeigefläche (12) Berührsensoren angeordnet sind derart, dass sie den Ort eines Aufsetzens eines Fingers (33) auf die Anzeigefläche (12) erkennen, zumindest mit einer Auflösung einer kleinsten erkennbaren Fläche entsprechend einem einzelnen durch Leuchtsegmente (14, 15) gekennzeichneten bzw. begrenzten Feld (17).

3. Kochfeld nach Anspruch 1 oder 2, **dadurch gekennzeichnet, dass** die Kochfeldsteuerung derart ausgebildet ist, dass in einem Auswählmodus erkannt wird, über welchen Feldern (17) ein Finger (33) einer Bedienperson aufgesetzt worden ist und ggf. durch aufgesetzte ziehende Bewegung (35) über weitere Felder (17) bewegt wird, wobei diese Felder (17) zu einer zusammenhängenden Auswählfläche zusammengefasst werden und diese Auswählfläche durch Aktivieren von zumindest teilweise umrandenden Leuchtsegmenten (14, 15) an der Anzeigefläche (12) dargestellt wird, wobei für diese Auswählfläche gilt, insbesondere durch einen einzigen Einstellvorgang, dass die der Auswählfläche entsprechenden Heizeinrichtungen (27) in einem Auswählbereich im Heizbereich (24) mit jeweils derselben Leistungshöhe oder Leistungsstufe arbeiten.

4. Kochfeld nach einem der vorhergehenden Ansprüche, **dadurch gekennzeichnet, dass** an der Kochfeldfläche (23), insbesondere zumindest im Heizbereich (24), aktivierbare Heiz-Leuchtsegmente (25, 26) vorgesehen sind entlang der Zeilen (AZ) und Spalten (AS) entsprechend den Leuchtsegmenten (14, 15) an der Anzeigefläche (12), wobei die Heiz-Leuchtsegmente (25, 26) an der Kochfeldfläche (23) entlang von Außenseiten der Heizeinrichtungen (27) verlaufen und zwischen zwei benachbarten Heizeinrichtungen (27) nur ein einziges Heiz-Leuchtsegment (25, 26) verläuft.

5. Verfahren zur Darstellung einer Anzeige an einem Kochfeld (22) nach einem der vorhergehenden Ansprüche,
mit den Schritten:
- die Topferkennungsmittel (27) erkennen ein auf den Heizbereich (24) aufgesetztes Kochgefäß (28), dessen Position und dessen Größe,
- an der Anzeigeeinrichtung (11) werden diejenigen Leuchtsegmente (14, 15) beleuchtet, die Felder (17) bilden entsprechend denjenigen Heizeinrichtungen (27), die von dem erkannten Kochgefäß (28) überdeckt sind,
**dadurch gekennzeichnet, dass**
- diese gebildeten Felder (17) entsprechend diesen Heizeinrichtungen (27) eine Fläche bilden und innerhalb dieser Fläche die Leuchtsegmente (14, 15) unbeleuchtet bzw. deaktiviert bleiben.

6. Verfahren nach Anspruch 5, **dadurch gekennzeichnet, dass** eine Überdeckung von min-destens einer Heizeinrichtung (27) durch das Kochgefäß (28) erfasst wird und für den Fall, dass in einer Kochfeldsteuerung für die erfasste Überdeckung einprogrammiert ist, dass das Kochgefäß (28) versetzt werden sollte für eine bessere Überdeckung der mindestens einen Heizeinrichtung (27) durch das Kochgefäß (28), an der Anzeigeeinrichtung (11) mittels Aktivieren der Leuchtsegmente (14, 15) angezeigt wird, welche Heizeinrichtungen (27) entsprechend den Feldern (17), die von den aktivierten Leuchtsegmenten (14, 15) als Fläche umrandet oder gebildet bzw. dargestellt werden, von dem Kochgefäß (28) überdeckt werden sollten, vorzugsweise gleichmäßig überdeckt werden sollten, als Anweisung für eine Bedienperson zum entsprechenden Versetzen des Kochgefäßes (28).

7. Verfahren nach Anspruch 5 oder 6, **dadurch gekennzeichnet, dass** für den Fall, dass das Kochgefäß (28) zwei Heizeinrichtungen (27) überdeckt, seine Größe jedoch derart ist, dass es nur maximal 10% mehr Fläche aufweist als eine der Heizeinrichtungen (27), eine Ziffer (19) nur in einem der beiden von Leuchtsegmenten (14, 15) gebildeten Feldern (17) dargestellt wird als Anweisung an eine Bedienperson, das Kochgefäß (28) im Heizbereich (24) entsprechend an die Stelle desjenigen Feldes (17) an der Anzeigefläche (12) zu versetzen, innerhalb dessen die Ziffer (19) dargestellt ist.

8. Verfahren nach einem der Ansprüche 5 bis 7, **dadurch gekennzeichnet, dass** eine Ziffer (19) für den Fall, dass mehr als ein Feld (17) eine zusammenhängende Fläche an der Anzeigefläche (12) bildet, immer möglichst weit rechts und/oder immer möglichst weit hinten in einem Feld (17) in der Fläche dargestellt wird.

9. Verfahren nach einem der Ansprüche 5 bis 7, **dadurch gekennzeichnet, dass** für den Fall, dass mehr als ein Feld (17) eine zusammenhängende Fläche an der Anzeigefläche (12) bildet, eine Ziffer (19) immer in dem Feld (17) dargestellt wird, dessen entsprechende Heizeinrichtung (27) von dem Kochgefäß (28) am stärksten überdeckt ist.

10. Verfahren nach einem der Ansprüche 5 bis 9, **dadurch gekennzeichnet, dass** an der Anzeigefläche (12) Berührsensoren angeordnet sind derart, dass sie den Ort eines Aufsetzens eines Fingers (33) auf die Anzeigefläche (12) erkennen, zumindest mit einer Auflösung einer kleinsten erkennbaren Fläche entsprechend einem einzelnen durch Leuchtsegmente (14, 15) begrenzten Feld (17), wobei in einem Auswählmodus erkannt wird, über welchen Feldern (17) ein Finger (33) einer Bedienperson aufgesetzt worden ist und ggf. durch aufgesetzte ziehende Bewegung (35) über weitere Felder (17) bewegt wird, wobei diese Felder (17) zu einer zusammenhängenden Auswählfläche zusammengefasst werden und diese Auswählfläche durch Aktivieren von zumindest teilweise umrandenden Leuchtsegmenten (14, 15) an der Anzeigefläche (12) dargestellt wird, wobei für diese Auswählfläche gilt, insbesondere durch einen einzigen Einstellvorgang, dass die der Auswählfläche entsprechenden Heizeinrichtungen (27) in einem Auswählbereich im Heizbereich (24) mit jeweils derselben Leistungshöhe oder Leistungsstufe arbeiten, wobei vorzugsweise die Leistungsstufe oder Leistungshöhe innerhalb der Auswählfläche an der Anzeigefläche (12) als Zeichen (20) oder Ziffer (19) dargestellt wird, insbesondere in einem vorderen Bereich bzw. Feld (17).

11. Verfahren nach Anspruch 10, **dadurch gekennzeichnet, dass** benachbarte oder entlang von einem Leuchtsegment (14, 15) aneinander angrenzende Felder (17) durch Aufsetzen des Fingers (33) und durch aufgesetzte ziehende Bewegung (35) über weitere Felder (17) zu einer beliebigen zusammenhängenden Flächengeometrie als Auswählfläche zusammengefasst werden.

12. Verfahren nach Anspruch 10 oder 11, **dadurch gekennzeichnet, dass** die Heizeinrichtungen (27) im Auswählbereich entsprechend der Auswählfläche mit derselben Leistungsdichte betrieben werden auf die Fläche einer Heizeinrichtung bezogen.

13. Verfahren nach einem der Ansprüche 10 bis 12, **dadurch gekennzeichnet, dass** nur Heizeinrichtungen (27) mit dieser Leistungsdichte betrieben werden, die zu mindestens 2% von einem Kochgefäß (28) überdeckt sind, vorzugsweise zu mindestens 10%.

14. Verfahren nach einem der Ansprüche 10 bis 13, **dadurch gekennzeichnet, dass** ein Betrieb der Heizeinrichtungen (27) im Auswählbereich unabhängig davon erfolgt, wie viele Kochgefäße (28) auf die Kochfeldfläche (23) aufgestellt worden sind.

15. Verfahren nach einem der Ansprüche 5 bis 14, **dadurch gekennzeichnet, dass** an der Kochfeldfläche (23), insbesondere zumindest im Heizbereich (24), aktivierbare Heiz-Leuchtsegmente (25, 26) vorgesehen sind entlang der Zeilen (AZ) und Spalten (AS) entsprechend den Leuchtsegmenten (14, 15) an der Anzeigefläche (12), wobei die Heiz-Leuchtsegmente (25, 26) an der Kochfeldfläche (23) entlang von Außenseiten der Heizeinrichtungen (27) verlaufen und zwischen zwei benachbarten Heizeinrichtungen (27) nur ein einziges Heiz-Leuchtsegment (25, 26) verläuft, wobei die Heiz-Leuchtsegmente der Kochfeldfläche (23) entsprechend den Leuchtsegmenten (14, 15) an der Anzeigefläche (12) aktiviert werden.

## Claims

1. Cooking hob (22), comprising:
- a cooking hob surface (23) having a heating region (24) for placing cooking vessels (28) for heating,
- a multiplicity of heating devices (27) in the heating region (24) under the cooking hob surface (23), wherein the heating devices (27) have a regular arrangement in rows (HZ) and columns (HS),
- pot detection means (27) in the heating region (24) for detecting a position and a size of the cooking vessels (28),
- a display device (11) having a display surface (12), wherein
- the display device (11) has elongated luminous segments (14, 15) which can be individually illuminated on the display surface (12),
- the luminous segments (14, 15) are arranged in such a manner that they form fields (17) in the display surface (12),
- the fields (17) are arranged in rows (AZ) and columns (AS)corresponding to the arrangement of the heating devices (27) in the heating region (24) with the same number of rows (HZ) and columns (HS),
- a luminous segment (14, 15) runs in the intermediate space between two fields (17),
- a display (19, 20) for presenting at least one arbitrary sign or arbitrary digit is arranged in each field (17),
- a hob controller,
**characterized in that** the hob controller is programmed and the hob controller is configured such that:
- the pot detection means (27) detect a cooking vessel (28) placed on the heating region (24), the position thereof and the size thereof,
- on the display device (11) those luminous segments (14, 15) which form fields (17) corresponding to those heating devices (27) which are covered by the detected cooking vessel (28) are illuminated, wherein these fields (17) corresponding to these heating devices (27) form an area and the luminous segments (14, 15) remain unilluminated or deactivated within this area.

2. Cooking hob according to claim 1, **characterized in that** touch sensors are arranged on the display surface (12) in such a manner that they detect the location at which a finger (33) is applied to the display surface (12), at least with a resolution of a smallest detectable area corresponding to an individual field (17) marked or bounded by luminous segments (14, 15).

3. Cooking hob according to claim 1 or 2, **characterized in that** the hob controller is designed in such a manner that a selection mode detects over which fields (17) a finger (33) of an operator has been applied and is possibly moved over further fields (17) by an applied pulling movement (35), wherein these fields (17) are combined to form a continuous selection area and this selection area is presented on the display surface (12) by activating at least partially bordering luminous segments (14, 15), wherein it holds true for this selection area, in particular as a result of a single setting operation, that the heating devices (27) corresponding to the selection area operate with the same power level or power setting in each case in a selection region in the heating region (24).

4. Cooking hob according to any of the preceding claims, **characterized in that** activatable heating luminous segments (25, 26) are provided on the cooking hob surface (23), in particular at least in the heating region (24), along the rows (AZ) and columns (AS) corresponding to the luminous segments (14, 15) on the display surface (12), wherein the heating luminous segments (25, 26) on the cooking hob surface (23) run along outer sides of the heating devices (27) and only a single heating luminous segment (25, 26) runs between two adjacent heating devices (27).

5. Method for presenting a display on a cooking hob (22) according to any of the preceding claims, comprising the steps:
- the pot detection means (27) detect a cooking vessel (28) which has been placed on the heating region (24), its position and its size,
- those luminous segments (14, 15) which form fields (17) corresponding to those heating devices (27) which are covered by the detected cooking vessel (28) are illuminated on the display device (11),
**characterized in that**
- these formed fields (17) corresponding to these heating devices (27) form an area and the luminous segments (14, 15) within this area remain unilluminated or deactivated.

6. Method according to claim 5, **characterized in that** coverage of at least one heating device (27) by the cooking vessel (28) is captured and, if the fact that the cooking vessel (28) should be moved for better coverage of the at least one heating device by the cooking vessel (28) is programmed in a hob controller for the captured coverage, the display device (11) displays, by activating the luminous segments (14, 15), which heating devices (27) corresponding to the fields (17) bordered or formed or represented by the activated luminous segments (14, 15) as an area should be covered by the cooking vessel (28), preferably should be uniformly covered, as an instruction for an operator to accordingly displace the cooking vessel (28).

7. Method according to claim 5 or 6, **characterized in that**, if the cooking vessel (28) covers two heating devices (27) but its size is such that it has only at most 10% more area than one of the heating devices (27), a digit (19) is presented only in one of the two fields (17) formed by luminous segments (14, 15) as an instruction to an operator to accordingly move the cooking vessel (28) in the heating region (24) to the location of that field (17) on the display surface (12) within which the digit (19) is presented.

8. Method according to any of claims 5 to 7, **characterized in that**, if more than one field (17) forms a continuous area on the display surface (12), a digit (19) is always presented as far to the right as possible and/or as far back as possible in a field (17) in the area.

9. Method according to any of claims 5 to 7, **characterized in that**, if more than one field (17) forms a continuous area on the display surface (12), a digit (19) is always presented in that field (17) whose corresponding heating device (27) is covered to the greatest extent by the cooking vessel (28).

10. Method according to any of claims 5 to 9, **characterized in that** touch sensors are arranged on the display surface (12) in such a manner that they detect the location at which a finger (33) is applied to the display surface (12), at least with a resolution of a smallest detectable area corresponding to an individual field (17) bounded by luminous segments (14, 15), wherein a selection mode detects over which fields (17) a finger (33) of an operator has been applied and is possibly moved over further fields (17) by an applied pulling movement (35), wherein these fields (17) are combined to form a continuous selection area and this selection area is presented on the display surface (12) by activating at least partially bordering luminous segments (14, 15), wherein it holds true for this selection area, in particular as a result of a single setting operation, that the heating devices (27) corresponding to the selection area operate with the same power level or power setting in each case in a selection region in the heating region (24), wherein preferably the power setting or power level within the selection area is presented on the display surface (12) as a character (20) or digit (19), preferably in a front region or field (17).

11. Method according to claim 10, **characterized in that** adjacent fields (17) or fields which adjoin one another along a luminous segment (14, 15) are combined to form any desired continuous area geometry as a selection area by applying the finger (33) and by an applied pulling movement (35) over further fields (17).

12. Method according to claim 10 or 11, **characterized in that** the heating devices (27) in the selection region corresponding to the selection area are operated with the same power density based on the area of a heating device.

13. Method according to any of claims 10 to 12, **characterized in that** only heating devices (27) which are covered by a cooking vessel (28) by at least 2%, preferably by at least 10%, are operated with this power density.

14. Method according to any of claims 10 to 13, **characterized in that** the heating devices (27) in the selection region are operated irrespective of how many cooking vessels (28) have been placed on the cooking hob surface (23).

15. Method according to any of claims 5 to 14, **characterized in that** activatable heating luminous segments (25, 26) are provided on the cooking hob surface (23), in particular at least in the heating region (24), along the rows (AZ) and columns (AS) corresponding to the luminous segments (14, 15) on the display surface (12), wherein the heating luminous segments (25, 26) on the cooking hob surface (23) run along outer sides of the heating devices (27) and only a single heating luminous segment (25, 26) runs between two adjacent heating devices (27), wherein the heating luminous segments of the cooking hob surface (23) are activated according to the luminous segments (14, 15) on the display surface (12).

## Revendications

1. Table de cuisson (22), comprenant :
- une surface de table de cuisson (23) présentant une région chauffante (24) pour poser dessus un récipient de cuisson (28) à chauffer,
- une pluralité de dispositifs de chauffage (27) dans la région chauffante (24) en dessous de la surface de table de cuisson (23), les dispositifs de chauffage (27) présentant un arrangement régulier en lignes (HZ) et en colonnes (HS),
- moyens de détection de casserole (27) dans la région chauffante (24) pour détecter une position et une taille des récipients de cuisson (28),
- un dispositif d'affichage (11) avec une surface d'affichage (12), dans lequel
- le dispositif d'affichage (11) présente des segments lumineux (14, 15) allongés et capables d'être éclairés individuellement sur la surface d'affichage (12),
- les segments lumineux (14, 15) sont disposés de telle manière qu'ils forment champs (17) dans la surface d'affichage (12),
- les champs (17) sont arrangés en lignes (AZ) et en colonnes (AS) correspondant à l'arrangement des dispositifs de chauffage (27) dans la région chauffante (24) au même nombre de lignes (HZ) et de colonnes (HS),
- dans l'espace entre deux champs (17) s'étend un segment lumineux (14, 15),
- dans chaque champ (17) est disposé un affichage (19, 20) pour la représentation d'au moins un signe quelconque ou un chiffre quelconque,
- une commande de table de cuisson,
**caractérisée en ce que** dans la commande de table de cuisson est mémorisé et la commande de table de cuisson est configurée tellement que :
- les moyens de détection de casserole (27) détectent un récipient de cuisson (28) posé sur la région chauffante (24), sa position et sa taille,
- sur le dispositif d'affichage (11) ceux des segments lumineux (14, 15) sont éclairés qui forment les champs (17) correspondant à ceux des dispositifs de chauffage (27) qui sont recouverts par le récipient de cuisson (28) détecté, dans lequel lesdits champs (17) forment une étendue correspondant à lesdits dispositifs de chauffage (27) et dans cette étendue les segments lumineux (14, 15) restent non allumés ou désactivés.

2. Table de cuisson selon la revendication 1, **caractérisée en ce que** capteurs de contact sont arrangés sur la surface d'affichage (12) de manière à détecter l'endroit d'un positionnement d'un doigt (33) sur la surface d'affichage (12), au moins avec une résolution d'une plus petite superficie détectable correspondant à un seul champ (17) marqué ou limité par segments lumineux (14, 15).

3. Table de cuisson selon la revendication 1 ou 2, **caractérisée en ce que** la commande de table de cuisson est configurée de manière à détecter dans un mode de sélection sur quels champs (17) un doigt (33) d'un opérateur a été posé et le cas échéant est dirigé sur autres champs (17) par un mouvement (35) tirant posé dessus, dans lequel ces champs (17) sont réunis dans une surface de sélection cohérente et cette surface de sélection est représentée sur la surface d'affichage (12) par activation de segments lumineux (14, 15) au moins partiellement encadrés, dans lequel pour cette surface de sélection il s'applique, en particulier par une seule opération de réglage, que les dispositifs de chauffage (27) correspondant à la surface de sélection fonctionnent dans une plage de sélection dans la région chauffante (24) avec respectivement le même niveau de puissance ou degré de puissance.

4. Table de cuisson selon l'une quelconque des revendications précédentes, **caractérisée en ce que** sur la surface de table de cuisson (23), en particulier au moins dans la région chauffante (24), segments lumineux de chauffage (25, 26) activables sont prévus le long des lignes (AZ) et colonnes (AS) correspondant aux segments lumineux (14, 15) sur la surface d'affichage (12), dans lequel les segments lumineux de chauffage (25, 26) s'étendent sur la surface de table de cuisson (23) le long de faces externes des dispositifs de chauffage (27) et ne qu'un seul segment lumineux de chauffage (25, 26) s'étend entre deux dispositifs de chauffage (27) adjacents.

5. Procédé de représentation d'un affichage sur une table de cuisson (22) selon l'une quelconque des revendications précédentes, comprenant les étapes :
- par les moyens de détection de casserole (27) détecter un récipient de cuisson (28) posé sur la région chauffante (24), sa position et sa taille,
- sur le dispositif d'affichage (11) éclairer ceux des segments lumineux (14, 15) qui forment les champs (17) correspondant à ceux des dispositifs de chauffage (27) qui sont recouverts par le récipient de cuisson (28) détecté,
**caractérisé en ce que**
- lesdits champs (17) formés correspondant à lesdits dispositifs de chauffage (27) forment une étendue et dans cette étendue les segments lumineux (14, 15) restent non allumés ou désactivés.

6. Procédé selon la revendication 5, **caractérisé en ce qu'**un recouvrement d'au moins un dispositif de chauffage (27) par le récipient de cuisson (28) est décelé et en cas que, pour le recouvrement décelé, il est programmé dans une commande de table de cuisson que le récipient de cuisson (28) doit être déplacé pour un recouvrement meilleur de l'au moins un dispositif de chauffage (27) par le récipient de cuisson (28), un affichage sur le dispositif d'affichage (11) présente par activation des segments lumineux (14, 15) lesquels dispositifs de chauffage (27) correspondant aux champs (17) entourés ou formés ou bien représentés sous forme d'étendue par les segments lumineux (14, 15) activés devraient être recouvert par le récipient de cuisson (28), de préférence devraient être recouvert uniformément, en tant que consigne pour un opérateur de déplacer le récipient de cuisson (28) en conséquence.

7. Procédé selon la revendication 5 ou 6, **caractérisé en ce que**, en cas que le récipient de cuisson (28) recouvre deux dispositifs de chauffage (27), cependant sa taille est telle qu'il a au maximum 10 % plus de superficie que l'un des dispositifs de chauffage (27), un chiffre (19) n'est représenté que dans l'un des deux champs (17) formés par segments lumineux (14, 15) en tant que consigne pour un opérateur de déplacer le récipient de cuisson (28) dans la région chauffante (24) respectivement à l'endroit de cet champ (17) sur la surface d'affichage (12) au sein duquel le chiffre (19) est représenté.

8. Procédé selon l'une quelconque des revendications 5 à 7, **caractérisé en ce que**, en cas que plus d'un champ (17) forme une étendue cohérente sur la surface d'affichage (12), un chiffre (19) est représenté toujours le plus à droite que possible et/ou toujours le plus à l'arrière que possible dans un champ (17) dans l'étendue.

9. Procédé selon l'une quelconque des revendications 5 à 7, **caractérisé en ce que**, en cas que plus d'un champ (17) forme une étendue cohérente sur la surface d'affichage (12), un chiffre (19) est représenté toujours dans le champ (17) où le dispositif de chauffage (27) correspondant est recouvert le plus largement par le récipient de cuisson (28).

10. Procédé selon l'une quelconque des revendications 5 à 9, **caractérisé en ce que** capteurs de contact sont arrangés sur la surface d'affichage (12) de manière à détecter l'endroit d'un positionnement d'un doigt (33) sur la surface d'affichage (12), au moins avec une résolution d'une plus petite superficie détectable correspondant à un seul champ (17) limité par segments lumineux (14, 15), dans lequel un mode de sélection détecte sur quels champs (17) un doigt (33) d'un opérateur a été posé et le cas échéant est dirigé sur autres champs (17) par un mouvement (35) tirant posé dessus, dans lequel ces champs (17) sont réunis dans une surface de sélection cohérente et cette surface de sélection est représentée sur la surface d'affichage (12) par activation de segments lumineux (14, 15) au moins partiellement encadrés, dans lequel pour cette surface de sélection il s'applique, en particulier par une seule opération de réglage, que les dispositifs de chauffage (27) correspondant à la surface de sélection fonctionnent dans une plage de sélection dans la région chauffante (24) avec respectivement le même niveau de puissance ou degré de puissance, dans lequel de préférence le degré de puissance ou niveau de puissance est représenté au sein de la surface de sélection sur la surface d'affichage (12) sous forme de signe (20) ou chiffre (19), en particulier dans une région ou un champ (17) avant.

11. Procédé selon la revendication 10, **caractérisé en ce que** champs (17) avoisinants ou adjacents le long d'un segment lumineux (14, 15) sont réunis dans une géométrie de surface cohérente quelconque en tant que surface de sélection par positionnement du doigt (33) et par mouvement (35) tirant posé dessus à travers d'autres champs (17).

12. Procédé selon la revendication 10 ou 11, **caractérisé en ce que** les dispositifs de chauffage (27) dans la plage de sélection correspondant à la surface de sélection sont opérés avec la même densité de puissance, par rapport à la superficie d'un dispositif de chauffage.

13. Procédé selon l'une quelconque des revendications 10 à 12, **caractérisé en ce que** seulement dispositifs de chauffage (27) sont opérés avec cette densité de puissance qui sont recouverts d'au moins 2 % par un récipient de cuisson (28), de préférence d'au moins 10 %.

14. Procédé selon l'une quelconque des revendications 10 à 13, **caractérisé en ce qu'**une opération des dispositifs de chauffage (27) se fait dans la plage de sélection de manière indépendante du fait combien de récipients de cuisson (28) se trouvent posé sur la surface de table de cuisson (23).

15. Procédé selon l'une quelconque des revendications 5 à 14, **caractérisé en ce que** sur la surface de table de cuisson (23), en particulier au moins dans la région chauffante (24), segments lumineux de chauffage (25, 26) activables sont prévus le long des lignes (AZ) et colonnes (AS) correspondant aux segments lumineux (14, 15) sur la surface d'affichage (12), dans lequel les segments lumineux de chauffage (25, 26) s'étendent sur la surface de table de cuisson (23) le long de faces externes des dispositifs de chauffage (27) et ne qu'un seul segment lumineux de chauffage (25, 26) s'étend entre deux dispositifs de chauffage (27) adjacents, dans lequel activation des segments lumineux de chauffage de la surface de table de cuisson (23) se fait correspondant aux segments lumineux (14, 15) sur la surface d'affichage (12).
